# EUROPÄISCHE PATENTSCHRIFT

(11) **EP 0 343 197 B1**
(45) Veröffentlichungstag und Bekanntmachung des Hinweises auf die Patenterteilung: **03.03.1993**
(21) Anmeldenummer: 88907621.2
(22) Anmeldetag: 10.09.1988
(51) Int. Cl.: F16H 47/04

(54) **STUFENLOSES HYDROSTATISCH-MECHANISCHES VERZWEIGUNGSGETRIEBE, INSBESONDERE FÜR KRAFTFAHRZEUGE**
INFINITELY VARIABLE, HYDROSTATIC-MECHANICAL GEAR SYSTEM, IN PARTICULAR FOR MOTOR VEHICLES
TRANSMISSION A CHANGEMENT DE VITESSE MECANIQUE/HYDROSTATIQUE A REGLAGE CONTINU, NOTAMMENT POUR VEHICULES AUTOMOBILES

(30) Priorität: 11.09.1987 DE 3730474
(43) Veröffentlichungstag der Anmeldung: 29.11.1989
(73) Patentinhaber: Meyerle, Michael, D-88074 Meckenbeuren (DE)
(72) Erfinder: Meyerle, Michael, D-88074 Meckenbeuren (DE)
(86) Internationale Anmeldenummer: DE8800563
(87) Internationale Veröffentlichungsnummer: WO8902552

(56) Entgegenhaltungen:
- DE-A- 3 533 193
- DE-A- 3 536 335
- DE-A- 3 622 045
- FR-A- 2 292 162
- GB-A- 1 568 819
- US-A- 3 722 324
- US-A- 4 116 089

## Beschreibung

Das Getriebe betrifft ein hydrostatisch-mechanisches Verzweigungsgetriebe, insbesondere für Kraftfahrzeuge nach dem Oberbegriff des Anspruches 1.

Ein ähnliches Getriebe ist bereits bekannt durch das US-A-4 116 089. Bei diesem Getriebesystem ist es erforderlich, das zweite Planetengetriebe (11) zwischen dem Hydrostaten und dem Summierungsplanetengetriebe anzuordnen. Dadurch entsteht der Nachteil, daß alle Schaltkupplungen getrennt voneinander angeordnet werden müssen. Die Ölzuführung zu den Kupplungen ist sehr kostenaufwendig und mit Leckverlusten behaftet, weil die Ölleitungen durch mehrere Wellen, insbesondere Hohlwellen, geführt werden müssen. Außerdem besteht der weitere Nachteil, daß höhere Schleppverluste in den einzelnen Kupplungselementen erzeugt werden, wie dies bei Lamellenkupplungen bekannt ist. Durch die getrennte Anordnung aller Bereichskupplungen wird desweiteren ein größerer Bauraum beansprucht und der Kostenaufwand ist größer. Ein weiterer wesentlicher Nachteil liegt auch darin, daß die einzelnen Planetengetriebeeinheiten durch zwischengelagerte Schalt-Kupplungselemente voneinander getrennt sind, wodurch die Vorzüge einer montagefreundlichen Bauweise bzw. einer Modulbauweise entfallen. Hinzu kommt, daß dieses Getriebesystem die Ausbaufähigkeit im Sinne eines Getriebeprogrammes hinsichtlich weiterer Schaltbereiche, z.B. für Fahrzeuge höherer Leistungsklassen, nicht ermöglicht.

Aufgabe der Erfindung ist es, ein hydrostatisch-mechanisches Verzweigungsgetriebe nach dem Oberbegriff des Anspruches 1 so weiterzubilden, daß eine wirtschaftliche Gesamtlösung, insbesondere für den anspruchsvollen Einsatz in Kraftfahrzeugen geschaffen wird, nämlich derart, daß eine kompaktere, einfachere Bauweise ermöglicht wird, die inneren Verluste gesenkt werden, weitgehende Eignung zur modularen Bauweise gegeben ist und die Herstellkosten gesenkt werden und an verschiedene Fahrzeugforderungen anpaßbar ist.

Diese Aufgabe wird erfindungsgemäß durch die Merkmale des Anspruches 1 gelöst. Weitere Ausgestaltungen der Erfindung gehen aus den Unteransprüchen hervor.

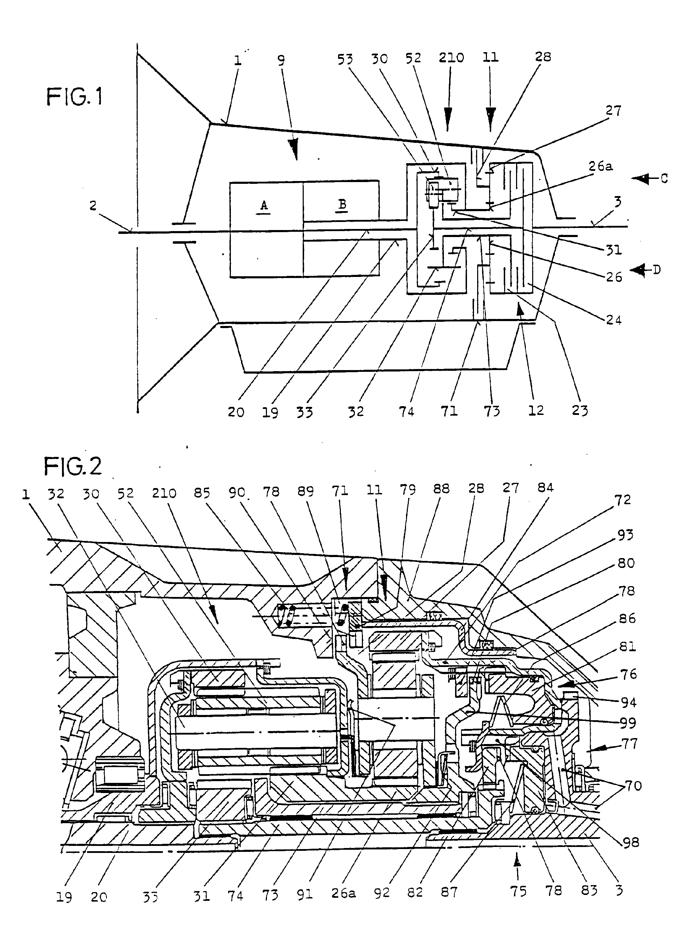

Die Kupplungen sind, wie in Figur 2 dargestellt, als formschlüssige Kupplungen mit einem entsprechenden Kupplungsprofil oder als form- plus Kraftschlüssige Kupplung, wie in der Anmeldung DE -A- 37 00 813.7 näher beschrieben. Diese zuletzt genannte Kupplungseinrichtung besitzt Kupplungsglieder mit einem Kupplungsprofil 78, die eine formschlüssige Verbindung zwischen den einzelnen Kupplungselementen im geschalteten Zustand herstellen und über ein Druckmedium, insbesondere durch Öldruck auf einen vorzugsweise als Ringkolben ausgebildeten Druckkolben 81; 83; 84 in der Schließstellung gehalten werden. Das Kupplungsprofil 78 ist so ausgebildet, daß eine drehmomentabhängige axiale Kraftkomponente in Richtung Öffnen der Kupplung erfolgt, die durch entsprechenden Öldruck in geschlossenem Zustand gehalten wird. Bei Wegnahme des Öldruckes öffnet die Kupplung durch die Rückholkraft entsprechender innenliegender Federn 85; 86; 87 und, falls erforderlich, durch die entsprechende drehmomentabhängige Axialkraft durch die entsprechende Schrägstellung des Kupplungs profiles 78 bzw. der Kupplungsverzahnung. Diese Kupplung ist nahezu frei von Schleppverlusten, da keine Reibelemente vorhanden sind, zugunsten des Getriebewirkungsgrades.

In der nachfolgenden Figurenbeschreibung wird das Getriebe im einzelnen näher beschrieben. Es zeigen:

Fig. 1 eine schematische Darstellung des Getriebesystems nach Ausführung C mit einem ersten hydrostatischen Vorwärtsfahrbereich, einem hydrostatischen Rückwärtsfahrbereich, sowie zwei hydrostastisch-mechanischen Vorwärtsfahrbereichen; und die Ausführung nach D mit zwei hydrostatisch-mechanischen Vorwärtsfahrbereichen und einem hydrostatisch-mechanischen Rückwärtsfahrbereich mit vorzugsweise gespreiztem ersten Vorwärtsfahrbereich und dem Rückwärtsbereich.

Fig. 2 einen Teilschnitt des Getriebes nach Ausführung C mit Darstellung des Summierungsplanetengetriebes der zweiten Planetengetriebeeinheit, sowie die einzelnen Bereichskupplungen.

Fig. 3 ein weiteres Ausführungsbeispiel des Summierungsplanetengetriebes 310.

Fig. 4 eine Getriebeausführung für ein frontgetriebenes Fahrzeug mit zur Antriebswelle versetzt angeordnetem Summierungsplanetengetriebe, zweites Planetengetriebe und Kupplungspaket und dazu weiter versetzt angeordnetem Achsdifferential.

Fig. 5 eine Weiterbildung des Summierungsplanetengetriebes 310 für die Schaffung eines weiteren hydrostatisch-mechanischen Fahrbereiches durch Kombination mit einer nachgeschalteten Getriebeeinheit.

Fig. 6 ein weiteres Ausführungsbeispiel des Summierungsplanetengetriebes (410).

Das Ausführungsbeispiel nach Figur 1 stellt ein Getriebe darmit koaxialer Anordnung aller Baueinheiten - Hydrostatgetriebe 9, Summierungsplanetengetriebe 210, zweite Planetengetriebeeinheit 11, sowie das Kupplungspaket 12 mit den Bereichskupplungen 23 und 24. Vorteilhaft ist die koaxiale Anordnung der Baugruppen hintereinander in aufgezählter Reihenfolge.

Das Hydrostatgetriebe 9 besteht aus einer ersten Hydrostateinheit A verstellbaren Volumens und einer zweiten Hydrostateinheit B vorzugsweise konstanten Volumens. Dem Hydrostatgetriebe nachgeordnet ist ein vierwelliges Summierungsplanetengetriebe 210. Dem Summierungsplanetengetriebe 210 ist eine zweite Planetengetriebeeinheit 11 zugeordnet. Zwei, in einem Kupplungspaket 12, zusammengefaßte Kupplungen 23 und 24 sind am Ausgang des Getriebes angeordnet und verbinden wechselweise eine der vier Wellen des Summierungsplanetengetriebes 210 mit der Abtriebswelle 3. Die zweite, dreiwellig ausgebildete Planetengetriebeeinheit 11 ist vorzugsweise zwischen Kupplungspaket 12 und dem Summierungsplanetengetriebe 210 angeordnet und durch Schalten einer Kupplung 71 mit der Abtriebswelle 3 in Triebverbindung. Die zweite Planetengetriebeeinheit 11 ist zu diesem Zweck mit seinem Steg 28 über die Kupplung 71 mit dem Gehäuse 1 verbindbar. In einer nicht dargestellten Ausführung ist der Steg 28 des zweiten Planetengetriebes mit dem Gehäuse 1 ständig verbunden, wobei das Hohlrad 27 der zweiten Planetengetriebeeinheit 11 über eine Kupplung mit der Abtriebswelle 3 verbindbar ist.

Das vierwellige Summierungsplanetengetriebe 210 ist mit seiner ersten Welle 20 mit der Antriebswelle 2, sowie der ersten verstellbaren Hydrostateinheit A verbunden. Die zweite Welle 19 des Summierungsplanetengetriebes, die im Ausführungsbeispiel nach Figur 1 und 2 mit dem Sonnenrad 31 verbunden ist, steht ständig auch in Triebverbindung mit der zweiten Hydrostateinheit B. Die dritte Welle 73 wird z. B. durch den Steg 32 gebildet, der über eine Kupplung 23 mit der Abtriebswelle verbindbar ist. Die vierte Welle 74 steht mit dem Sonnenrad 33 in Verbindung und ist über eine Kupplung 24 mit der Abtriebswelle 3 verbindbar. Bei Getriebeausführung Figur 1 C ist die zweite Welle 19 des Summierungsplanetengetriebes 210 zusätzlich mit dem Sonnenrad 26 a der zweiten Planetengetriebeeinheit 11 verbunden.

Gegenüber dem bekannten Getriebe US-A-4,116,089 besitzt dieses Summierungsplanetengetriebe nicht zwei Hohlräder, sondern nur eines und es besitzt nicht zwei Stegwellen, sondern nur eine Stegwelle, jedoch mit doppelter Planetenradausführung. Teilezahl und Kosten sind somit bei dem Summierungsplanetengetriebe der Erfindung niedriger.

Bei Getriebeausführung Figur 1 D ist das Sonnenrad 26 der zweiten Planetengetriebeeinheit 11 mit der dritten Welle 73 des Summierungsplanetengetriebes verbunden.

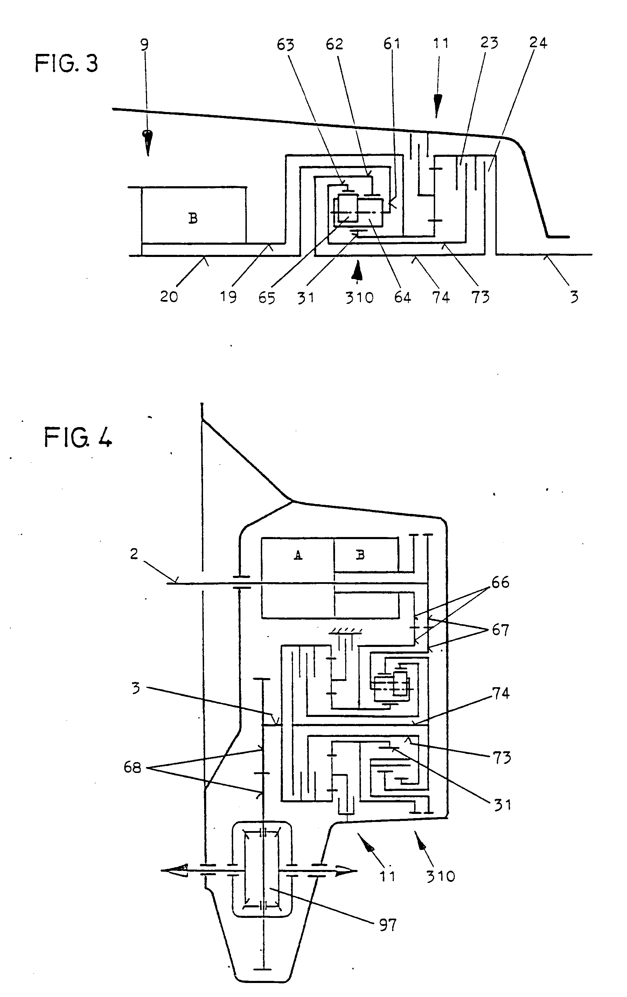

Das Summierungsplanetengetriebe ist verschiedenartig ausführbar, wie in der Anmeldung DE - A-35 33 193 näher beschrieben. Eine weitere Ausführung stellt das Summierungsplanetengetriebe 310 Figur 3 dar.

Im Ausführungsbeispiel Figur 1 und Figur 2 besteht das Summierungsplanetengetriebe 210 aus einem Planetengetriebe mit einem Hohlrad 30 und zwei Sonnenrädern 31 und 33 und einem Steg 32, auf dem ineinandergreifende erste Planetenräder 52 und zweite Planetenräder 53 angeordnet sind. Die erste Welle 20 des Summierungsplanetengetriebes ist mit dem Hohlrad 30 verbunden, das in erste Planetenräder 52 eingreift, die zweite Welle 19 steht in Verbindung mit dem Sonnenrad 31, das ebenfalls in erste Planetenräder 52 eingreift, die dritte Welle 73 bildet der Steg, wie bereits beschrieben und die vierte Welle 74 ist mit dem zweiten Sonnenrad 33 verbunden, das mit den zweiten Planetenrädern 53 kämmt.

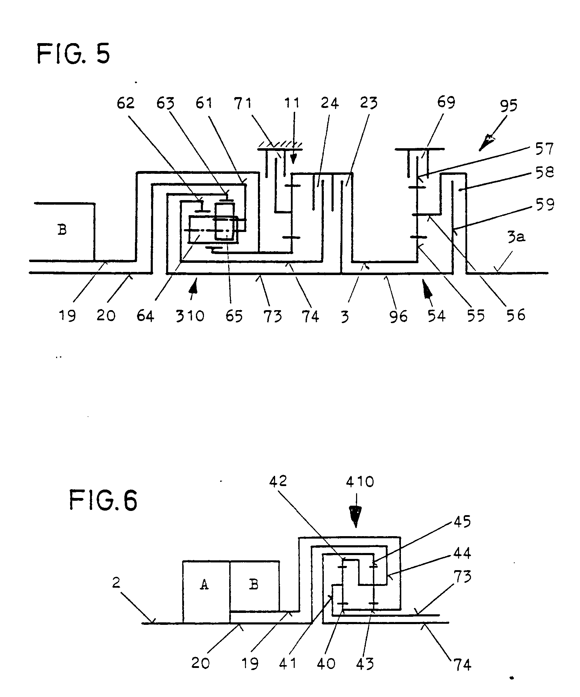

Das Summierungsplanetengetriebe 310 nach Figur 3 besitzt zwei Hohlräder 62 und 63, die mit der dritten und vierten Welle 73 und 74 des Summierungsplanetengetriebes verbunden sind. Hier ist als Vorteil anzusehen, daß die vierte Welle nicht als Sonnenrad, sondern als Hohlrad ausgebildet ist, wodurch die Zahnkräfte und die spezifischen Belastungen relativ niedrig gehalten werden zugunsten von Kosten und Standfestigkeit. Außerdem hat dieses Summierungsplanetengetriebe 310 den Vorteil, daß die beiden Ausgangswellen 73 und 74 alternativ gegeneinander vertauscht werden können, so daß die vierte Welle 74 ebenso wie bei der Getriebeausführung 210 die innere Welle und die dritte Welle 73 die äußere Welle darstellt oder daß, wie in Figur 5 gezeigt, die dritte Welle 73 die innere Welle und die vierte Welle 74 die darüberliegende Welle als Hohlwelle bildet. Wie in Figur 5 dargestellt, ergibt sich damit der Vorteil, daß durch Kombination eines weiteren nachfolgenden Getriebes 95, ein zusätzlicher hydrostatisch-mechanischer Fahrbereich angeschlossen werden kann, z. B. für den Zweck, eine Getriebefamilie für verschiedene Leistungsklassen, das heißt in diesem Fall ein Getriebe für eine höhere Leistungsklasse mit gleichen Grundbaueinheiten bezüglich Hydrostatgetriebe, Summierungsplanetengetriebe schaffen zu können. Die dritte Welle dient bei dieser Getriebeausführung für die Übertragung der hydraulisch-mechanischen Leistung für den zusätzlichen letzten Fahrbereich, wobei die Leistung über die verlängerte Welle 96 in das Zusatzgetriebe 95 einfließt.

Die Erfindung zeichnet sich somit durch einen weiteren Vorteil aus, nämlich daß im Hinblick auf die Forderungen, z.B. im PKW-Getriebe-Bereich für höhere Leistungsklassen ein zusätzlicher Fahrbereich geschaffen werden kann, indem, wie in Figur 5 dargestellt, ein drittes Planetengetriebe 54 nachgeordnet ist, dessen erstes Glied (Sonnenrad 55) mit der Abtriebswelle 3 verbunden ist, dessen zweites Glied, Steg 56 mit der zweiten Abtriebswelle 3a, die bei dieser Ausführungsform die Ausgangswelle des Getriebes bildet, verbunden ist und das dritte Glied (Hohlrad 57) über eine Kupplung 69 mit dem Gehäuse verbindbar ist. Über eine weitere dem Planetengetriebe 54 zugeordnete Kupplung 58 ist ein weiterer Fahrbereich schaltbar, indem die dritte Welle 73 des Summierungsplanetengetriebes mit einer verlängerten Welle 96 und einem weiteren Kupplungsglied 59 ausgestattet ist, die über eine Kupplung 58 direkt mit der Getriebeausgangswelle 3a bei Synchronlauf aller Kupplungsglieder verbindbar ist. Bei geschaltetem letzten Fahrbereich ist die Kupplung 69 geöffnet und das Planetengetriebe 54 lastlos. Die Kupplung 58 ist vorzugsweise dem Planetengetriebe 54 nachgeordnet.

Das Summierungsplanetengetriebe 310 besteht aus ineinandergreifende Planetenräder 64 und 65, die gemeinsam auf dem Steg 61,der mit der ersten Welle des Summierungsplanetengetriebes verbunden ist. Die zweite Welle 19 steht in fester Drehverbindung mit dem Sonnenrad 31, das in erste Planetenräder 64 eingreift. Die dritte Welle 73 steht in fester Verbindung mit dem Hohlrad 63, das mit den zweiten Planetenrädern 65 kämmt und das Hohlrad 62 ist fest mit der vierten Welle 74 verbunden, das über die ersten Planetenräder 64 angetrieben wird.

Die zweite Planetengetriebeeinheit 11 kann auch zwischen Summierungsplanetengetriebe 210 und der Hydrostateinheit B angeordnet werden, wobei das Kupplungspaket 12; 75 unverändert am Abtrieb des Getriebes, wie in Figur 2 dargestellt, bleiben kann.

Funktion Getriebeausführung Figur 1 C bzw. Figur 2. Diese Getriebeausführung besitzt einen ersten reinhydrostatischen Vorwärtsfahrbereich und einen hydrostatischen Rückwärtsbereich, sowie zwei hydrostatisch-mechanische Vorwärtsfahrbereiche. Im Anfahrzustand wird der Steg 28 der zweiten Planetengetriebeeinheit 11 mit dem Gehäuse 1 durch Schließen der Kupplung 71 verbunden. Hierdurch wird eine Triebverbindung zwischen der zweiten Hydrostateinheit B über die zweite Planetengetriebeeinheit 11 mit der Abtriebswelle 3 hergestellt. Durch Verstellen der ersten verstellbaren Hydrostateinheit A wird nun die zweite Hydrostateinheit B, je nach gewünschter Fahrtrichtung vorwärts oder rückwärts, in die entsprechende Drehrichtung verstellt, wodurch stufenlos reinhydrostatisch die Leistung über die zweite Planetengetriebeeinheit 11 auf die Abtriebswelle übertragen wird. Bei vorgewählter Fahrtrichtung in Richtung vorwärts wird die Welle 19, sowie die zweite Hydrostateinheit B in Gegendrehrichtung zur Antriebswelle 2 bewegt, wobei am Ende der Hydrostatverstellung die Abtriebswelle 3 mit der dritten Welle 73 des Summierungsplanetengetriebes Synchronlauf bzw. annähernd Synchronlauf erzielt hat. Nun erfolgt die Schaltung in den zweiten Bereich durch Schließen der Kupplung 23;76 und Öffnen der Kupplung 71. Der Hydrostat wird nun wieder zurückgestellt bis Null und darüberhinaus bis in seine Gegendrehrichtung, wo dieser (Welle 19) am Ende seiner Verstellung Gleichlauf mit der Antriebswelle 2 erreicht hat. In diesem Punkt haben alle Glieder des Summierungsplanetengetriebes 210 der zweiten Planetengetriebeeinheit 11, sowie alle Kupplungsglieder Synchronlauf erreicht. Jetzt erfolgt die Schaltung vom zweiten in den dritten Bereich, indem die vierte Welle 74 des Summierungsplanetengetriebes mit der Abtriebswelle 3 über die Kupplung 24;77 verbunden wird. Der Hydrostat kann nun nochmals innerhalb seines gesamten Verstellbereiches durchfahren werden bis Ende des dritten Fahrbereiches.
Im zweiten und im dritten Fahrbereich wird die Leistung hydrostatisch-mechanish übertragen, wobei die mechanische Leistung über das Hohlrad 30 und die hydrostatische Leistung über das Sonnenrad 31 im Summierungsplanetengetriebe 210 aufsummiert wird und im zweiten Bereich gemeinsam über die dritte Welle , dem Steg 32 und im dritten Bereich über die vierte Welle - dem Sonnenrad 33 auf die Abtriebswelle 3 übertragen wird.

Bei Ausführung nach Figur 1 D ist im Anfahrzustand der Hydrostat bereits auf seine volle negative Verstellgröße eingestellt, das heißt die zweite Hydrostateinheit B dreht mit annähernd gleicher Drehzahlgröße in Gegendrehrichtung zur Antriebswelle 2. Im ersten Vorwärtsfahrbereich wird die Leistung hydrostatisch-mechanish über die dritte Welle 73 des Summierungsplanetengetriebes übertragen. Im Anfahrzustand hat die dritte Welle 73 jedoch bereits eine gewisse Drehzahl, die einem gewissen Übersetzungspunkt X, wie in der Hauptanmeldung unter Figur 5 dargestellt und beschrieben, entspricht.
Der Übersetzungspunkt "X" entspricht einer gewissen Mindestgeschwindigkeit des Fahrzeugs, z.B. dem Endpunkt des ersten hydrostatischen Fahrbereiches oder der Geschwindigkeit eines ersten Ganges bei einem PKW. Besonders vorteilhaft ist diese Ausführung für Sportfahrzeuge, da der erste Bereich sehr spontan durch den Schließvorgang der entsprechenden Kupplung 23 bzw. 71 überwunden wird; im Effekt ähnlich einem Handschaltgetriebe, jedoch mit automatischer Kupplung.

Von Null bis zu diesem Übersetzungspunkt X wird nun im Anfahrvorgang die dritte Welle 73 des Summierungsplanetengetriebes durch Schließen der Kupplung 23 mit der Abtriebswelle 3 verbunden. Die Kupplung 23 ist in diesem Fall als Reibkupplung ausgelegt und wird angesteuert über ein oder mehrere Signale, wie in der Hauptanmeldung näher beschrieben. Anstelle der Anfahreinrichtung über die Kupplung 23 kann alternativ der Hydrostat 9 über ein Bypaßventil, wie ebenfalls in der Hauptanmeldung näher beschrieben, ausgeführt werden, wobei die Kupplung 23 auch als formschlüssige bzw. form- lastschlüssige Kupplung ausgeführt werden kann, wobei vorzugsweise diese Kupplung mit einer Synchronisiereinrichtung versehen ist, wie in DE-A-37 00 813.7 näher beschrieben. Ab dem Übersetzungspunkt X wird nun der Hydrostat zurückgeschwenkt auf Null und darüberhinaus bis Erreichen des Synchronlaufes mit der Antriebswelle 1, was dem Endpunkt der Verstellung des Hydrostatgetriebes entspricht. In diesem Punkt laufen alle Glieder des Summierungsplanetengetriebes der zweiten Planetengetriebeeinheit und der Kupplungen block um, wodurch bei Synchronlauf die Schaltung in den nächsten bzw. in den zweiten Bereich erfolgen kann durch Schließen der Kupplung 24 und Öffnen der Kupplung 23. Der Hydrostat wird nun wieder innerhalb des zweiten Schaltbereiches voll durchgeregelt bis zu seiner anderen Endstellung, was dem Ende des zweiten Schaltbereiches entspricht.

Im Rückwärtsfahrbereich, bei Ausführung Figur 1 D wird im Anfahrvorgang die Kupplung 71 geschlossen, wodurch die Leistung hydrostatisch-mechanisch über die zweite Planetengetriebeeinheit 11 über das Sonnenrad 26, das Hohlrad 28 auf die Abtriebswelle 3 übertragen wird. Die Kupplung 71 ist in diesem Fall entweder als Reibkupplung ausgebildet, wobei der Schließvorgang der Kupplung über Signale, wie für den Vorwärtsfahrbereich beschrieben, erfolgt. Bei Ausführung mit einem Bypaßventil im Hydrostatgetriebe 9 kann diese Kupplung jedoch auch als formschlüssige bzw. als form- Kraftschlüssige Kupplung ausgelegt werden. Bei dieser Getriebeausführung wird auch im Rückwärtsbereich, wie im ersten Vorwärtsfahrbereich, die Leistung hydrostatisch-mechanisch auf die Abtriebswelle 3 übertragen.

Der Schaltimpuls kann z. B. durch einen Synchronimpuls aus einem Drehzahlvergleich elektronisch ausgelöst werden oder durch eine mechanische oder elektrische Stellgröße des Hydrostatgetriebes 9.

Bei Anwendung der Bereichskupplungen 71, 76, 77 mit formschlüssigen bzw. mit form- Kraftschlüssigen Kupplungselementen ist die Steuereinrichtung für die Bereichsschaltung so auslegbar, daß Abweichungen vom Synchronlauf der zu schaltenden Kupplungselemente, die z. B. lastabhängig durch einen Drehzahlschlupf des Hydrostatgetriebes erzeugt werden, dadurch kompensiert, daß in der Schaltphase bei oder nach dem Einleiten des Schaltimpulses die Regelung des Antriebsmotors derart beeinflußt wird, daß eine kurzzeitige Lastreduzierung, das heißt Drehmomentrücknahme des Antriebsmotors erfolgt durch eine entsprechende Änderung der Kraftstoffzufuhr,die z. B. über die Elektronik automatisch geregelt wird. Auf diese Art kann der Drehzahlschlupf des Hydrostaten, der je nach Lastzustand unterschiedlich groß sein kann, ausgeglichen werden ohne spürbaren Schaltstoß und ohne Lastunterbrechung innerhalb der Schaltphase. Je nach Lastzustand kann die Motorregelung z. B. über elektronische Steuerung die Motorfüllung mehr oder weniger groß beeinflussen, z. B. über ein Signal, das vom Schaltimpuls bzw. von einem Schaltsignal ausgelöst wird.

Das Mitnahmeprofil 78 der Kupplungselemente 80, 81; 28, 79 kann bei einer derartigen Schalteinrichtung einfach ausgebildet werden, wie in der DE-A-35 00 813.7 unter Figur 5 mit den Kupplungsverzahnungen 306, 307 bzw. 308, 309 dargestellt und beschrieben.

Zum Ausgleich von Synchronlaufabweichungen in der Schaltphase dient ein spezielles Kupplungprofil, wie in Fig. 3, Fig.4 u. Fig. 5a der vorgen. Patentanmeldung dargestellt u.beschrieben.Dieses Kupplungsprofil besitzt ein Verdrehspiel SV zum Ausgleich von Synchronlaufabweichungen in der Schaltphase. Zur Optimierung der Schaltqualität ist die Kupplungssteuerung so ausgelegt, daß sofort, nachdem die Kupplung eingerastet hat und der volle Kupplungsdruck auf dem entsprechenden Kupplungsglied bzw. Druckkolben 81 bzw. 83 aufgebaut ist, als Folge aus diesem Kupplungsdruck das Öffnungssignal der anderen Kupplung ausgelöst wird, so daß die Überschneidungsphase, in der beide Kupplungen geschlossen sind, auf ein Mindestzeitmaß reduziert wird und ein spontaner Schaltablauf gewährleistet ist und außerdem eine Lastunterbrechung in der Schaltphase verhindert wird.

Dieses beschriebene Getriebesystem in Verbindung mit einer derartigen Kupplungseinrichtung mit formschlüssigen bzw. mit form- Kraftschlüssigen Kupplungselementen und einer entsprechenden Steuer- und Regeleinrichtung, wie beschrieben, führt zu einem stufenlosen Getriebe, das insgesamt kostengünstig herstellbar ist, eine kompakte und kurze Bauweise erlaubt und darüberhinaus die inneren Schleppverluste der Kupplungen und Leckverluste in den Ölzuführungen gegenüber bekannten Getrieben wesentlich reduziert zur Steigerung des Getriebewirkungsgrades.

Als weitere Einrichtung zur Schaltoptimierung dient ein in der Schaltphase von einem Schaltsignal ausgelöste Ansteuerung eines Bypaßventiles, das zwischen den Arbeitsdruckleitungen der Hydrostateinheiten AB angeordnet ist, das kurzzeitig eine Reduzierung der Drehmomente innerhalb der Schaltelemente bewirkt, so lange bis die Kupplung 71; 76; 77 geschlossen hat, wonach z. B. nach erreichtem Kupplungsdruck gleichzeitig das Signal zur Aufhebung der Bypaßfunktion augelöst wird.

Bei Ausführung nach Figur 1 D, wobei alle Bereichskupplungen 71, 23, 24 als form- lastschlüssige Kupplungen 71, 76, 77, wie in Figur 2 dargestellt, ausgebildet sind, kann als Anfahrkupplung zur Überbrückung der Übersetzungsspreizung "X" eine am Getriebeeingang angeordnete Reibungskupplung , wie ansich bekannt, oder auch hydrodynamische Kupplung verwendet werden. Zum Anfahren wird bei dieser Ausführung bei geöffneter Anfahrkupplung die erste Bereichskupplung 71 bzw. Rückwärtsbereichskupplung 23 geschaltet.

Die Kupplung 71 nach Figur 2 für den ersten und den Rückwärtsbereich ist besonders kostengünstig herstellbar. Der Druckkolben 84 besteht aus einem Blechprägeteil, der in einem abtriebsseitigen Gehäuseteil 88 sitzt. Der Kupplungsring 79 mit Kupplungsprofil 78 ist axial verschiebbar und drehfest gegen das Gehäuse 1 oder Gehäuseteil 88 über ein Halteprofil 89 gelagert. Im Schaltzustand der Kupplung 71 wird der mit dem Steg 28 der zweiten Planetengetriebeeinheit 11 verbundene Kupplungsring mit Kupplungsprofil 78 durch den Druckkolben 84 gegen eine Anlagefläche 90 des Gehäuses 1 gedrückt, wodurch eine geringe axiale Verschiebung des Planetenträgers 28 gegen den Druck einer Feder 91 erfolgt.

Beim Schalten der Bereichskupplung 76 wird der Kupplungsring 80 ebenfalls geringfügig bei niedrigem Druck gegen eine Feder 92 bis zu seiner festen Anlage an dessen Gegendruckplatte 93 axial verschoben. Die Kupplungselemente sind axial über die entsprechenden Federelemente 91, 92 mit geringer Federkraft fixiert, wodurch die Elemente der jeweiligen nicht geschalteten Kupplung frei von Reib- und Schleppverlusten sich bewegen können.

Ein besonderer Vorteil dieses Getriebes besteht auch darin, daß, wie in Figur 2 dargestellt, im abtriebsseitigen Gehäuseteil 88 auf einfache Art alle Kupplungen, gegebenenfalls einschließlich der zweiten Planetengetriebeeinheit 11, zu einer Baueinheit vormontiert werden können.

Die einzelnen Baugruppen - Hydrostatpaket 9, Summierungsplanetengetriebe 210, zweite Planetengetriebeeinheit 11 und Kupplungspaket 12; 75 - können, wie in der DE-A-35 33 193 dargestellt und beschrieben, auch parallel versetzt zueinander angeordnet werden, je nach den Fahrzeugforderungen, insbesondere im Hinblick auf eine fahrzeugfreundliche Bauform, was als weiterer Vorteil dieses Getriebesystems gilt.

Wie in Figur 4 dargestellt, kann für eine Getriebeausführung, z. B. für ein frontgetriebenes Fahrzeug mit querangeordnetem Motor, das Summierungsplanetengetriebe 310; 210, zweites Planetengetriebe 11 und das Kupplungspaket 12; 75 parallel versetzt zur Antriebswelle 2 angeordnet werden, wobei die mechanische Leistung über eine Stirnradstufe 67 und die hydraulische Leistung über eine Stirnradstufe 66 auf die erste bzw. zweite Welle des Summierungsplanetengetriebes übertragen werden. Die Abtriebswelle 3 ist bei dieser Getriebeausführung über eine weitere Stirnradstufe 68 mit einem Achsdifferential 97 verbunden.

In einer weiteren, nicht dargestellten Ausführungsform, z.B. für ein Fahrzeug mit längsangeordnetem Getriebe, jedoch querliegendem Achsdifferential für Frontantrieb, besteht die Möglichkeit, ein Achsdifferential unterhalb dem Hydrostatgetriebe 9 anzuordnen, wobei die Triebverbindung von der Abtriebswelle 3 über eine Stirnradstufe auf eine Zwischenwelle und einem Kegeltrieb am Differential erfolgt.

Die Parksperrverzahnung 94 ist vorteilhaft an einem Glied der Abtriebswelle 3, das gleichzeitig als Kupplungsträger dient, angebracht.

## Patentansprüche

1. Hydrostatisch-mechanisches Leistungs-Verzweigungsgetriebe, insbesondere für Kraftfahrzeuge mit zwei oder mehreren Schaltbereichen mit einer ersten Hydrostateinheit (A) verstellbaren Volumens und einer zweiten Hydrostateinheit (B), mit einem Summierungsplanetengetriebe (210, 310, 410) zum Aufsummieren der hydraulischen und mechanishen Leistung und zwei oder mehreren Schaltkupplungen, zum Schalten ohne Lastunterbrechnung der oben genannten Schaltbereiche (71, 76, 77; 23, 24) **dadurch gekennzeichnet**, daß wenigstens eine der schaltbaren Kupplungen (71, 79, 77; 71, 23, 24) als formschlüssig schaltbare Kupplung ausgebildet ist, die mittels eines auf einem Kupplungsträger (70; 1, 88; 98) drehfest aber axial verschiebbar angeordneten hydraulisch betätigbaren Kolben (81; 83; 84) schaltbar ist, daß die Bereichsschaltung bei Synchronlauf der zu schaltenden Kupplungsglieder stattfindet, und daß die alte Kupplung erst nach Schließer der neuen Kupplung öffnet.

2. Hydrostatisch-mechanisches Verzweigungsgetriebe, nach Anspruch 1 dadurch gekennzeichnet, daß das Summierungsplanetengetriebe ein vierwelliges Summierungsplanetengetriebe ist zum Aufsummieren der hydraulischen und mechanischen Leistung, dem ein zweites dreiwelliges mit einem Sonnenrad und einem Hohlrad ausgebildeten Planetengetriebe zugeordnet ist.

3. Verzweigungsgetriebe nach dem Anspruch 1 **dadurch gekennzeichnet,** daß die beiden Kupplungen (76, 77) zu einem Kupplungspaket (75) zusammengefaßt und übereinander angeordnet sind, wobei die mit höherem Drehmoment belastete Kupplung (76) die äußere Kupplung und die mit niedrigerem Drehmoment belastete Kupplung (77) die innere Kupplung ist.

4. Verzweigungsgetriebe nach Anspruch 1 bis 3, **dadurch gekennzeichnet,** daß eine oder mehrere der Kupplungen (71, 76, 77; 23, 24) als formplus kraftschlüssige schaltbare Kupplungen ausgebildet sind, wobei das Kupplungsprofil (78) der Kupplungsglieder (80, 81; 82, 83) so ausgelegt ist, daß eine drehmomentabhängige Axialkraft erzeugt wird in Richtung Öffnen der Kupplung und daß die Kupplungen durch Öldruck geschlossen gehalten werden.

5. Verzweigungsgetriebe nach Anspruch 1 bis 3 **dadurch gekennzeichnet**, daß die Kupplungen (77 und 76) mit einem gemeinsamen als Blechprägeteil ausgebildeten Kupplungsglied ausgestattet sind.

6. Verzweigungsgetriebe nach Anspruch 5 dadurch gekennzeichnet, daß in diesem gemeinsamen Kupplungsglied (84) das Mitnahmeprofil (98) für die andere Bereichskupplung (77) mit eingeprägt ist, in das gleichzeitig der Druckkolben (83), der ebenfalls einteilig mit dem Kupplungsring ausgebildet ist, mit seinem äußeren Mitnahmeprofil eingreift.

7. Verzweigungsgetriebe nach einem oder mehreren der Ansprüche 1 bis 6 **dadurch gekennzeichnet**, daß in dem Endgehäuse (88) des Getriebes das Kupplungspaket (87, 86) und vorzugsweise das zweite Planetengetriebe (11) samt allen Kupplungselemeten für die Kupplungen (71, 76 und 77) für alle Schaltbereiche als eine gemeinsame Baueinheit montierbar sind.

8. Verzweigungsgetriebe nach einem oder mehreren der Ansprüche 1 bis 7 **dadurch gekennzeichnet**, daß das den Druckkolben (84; 81) gegenüberliegende Kuplungsglied (Steg 28; kupplungsring 99) gegen den Druck einer Feder (91; 92) axial federnd angeordnet ist, um das Kupplungsglied anlagefrei und schleppverlustfrei gegen seine jeweilige Anlagefläche (90; 93) zu fixieren.

9. Verzweigungsgetriebe nach einem der Ansprüche 1 bis 8 **dadurch gekennzeichnet**, daß während der Schaltphase eine kurzzeitige Lastreduzierung des Antriebsmotors erfolgt.

## Claims

1. Hydromechanical power-split transmission, in particular for vehicles with at least two speed ranges, having a first variable displacement hydrostatic unit (A) and a second hydrostatic unit (B), a summation planetary gear train (210, 310, 410) for summing up the hydraulic and the mechanical power and at least two shift clutches (71,76,77;23,24) for power-shifting said speed ranges,
characterised in that at least one shift clutch (71,76,77;71,23,24) is arranged as a shiftable positive clutch which is shifted by means of a hydraulically actuated piston (81;83;84) arranged fixedly in rotation but axially translatable on a clutch carrier, in that the shift of the speed ranges occurs at the synchronism of the clutch members to be engaged, and in that the old clutch is opened only after the engagement of the new clutch.

2. Hydromechanical power-split transmission according to claim 1, characterised in that the summation planetary gear train is a four-shaft planetary gear train, which is connected to a second three-shaft planetary gear train.

3. Power-split transmission according to claim 1, characterised in that both said clutches (76,77) are assembled in a clutch package (75) and are concentrically arranged, wherein the clutch (76) transmitting the highest torque is the external clutch and the clutch (77) transmitting the lowest torque is the internal clutch.

4. Power-split transmission according to claims 1 to 3, characterised in that at least one clutch (71,76,77; 23,24) is arranged as a shiftable compound positive plus friction clutch, wherein a coupling profile (78) of the clutch members (80,81;82,83) is arranged to generate an axial clutch opening force dependent on the torque and in that the clutches are maintained in the engaged position by means of hydraulic pressure.

5. Power-split transmission according to claims 1 to 3, characterised in that the clutches (76 and 77) are provided with a common clutch member formed of sheet metal.

6. Power-split transmission according to claim 5, characterised in that a coupling profile (98) for the other range clutch (77) is also formed in said common clutch member (84) and meshes with the external coupling profile of the piston (83) which is integral with the clutch ring.

7. Power-split transmission according to at least one of the claims 1 to 6, characterised in that the clutch package (87,86) and preferably the second planetary gear train (11) comprising all clutch members of the clutches (71,76 and 77) for all speed ranges can be disposed in the rear housing (88) of the transmission as a common subassembly.

8. Power-split transmission according to at least one of the claims 1 to 7, characterised in that the clutch member (carrier 28; clutch ring 99) opposite to the pistons (84;81) is mounted axially resilient against a spring (91;92), for maintaining the clutch member without contact and without friction drag against the respective thrust surface (90;93).

9. Power-split transmission according to one of the claims 1 to 8, characterised in that the output torque of the engine is briefly reduced during the shifting operation.

## Revendications

1. Transmission hydro-mécanique à division de puissance, en particulier pour véhicules automobiles, comportant au moins deux gammes de vitesses, comprenant une première unité hydrostatique à capacité variable (A) et une seconde unité hydrostatique (B), une transmission à trains planétaires sommateurs (210, 310, 410) pour additionner la puissance hydraulique et la puissance mécanique et au moins deux embrayages de passage (71,76,77;23,24) pour changer lesdites gammes de vitesses sous couple,
caractérisée en ce qu'au moins un embrayage de passage (71,76, 77; 71,23,24) est composé d'un crabot qui est appliqué au moyen d'un piston (81;83;84) commandé hydrauliquement, fixé en rotation mais translatable axialement sur un support, en ce que le passage de gamme de vitesses s'effectue au point de synchronisme des éléments d'embrayages qui doivent être engagés, et en ce que l'ancien embrayage est ouvert seulement après la fermeture du nouvel embrayage.

2. Transmission hydro-mécanique à division de puissance selon la revendication 1, caractérisée en ce que la transmission à trains planétaires sommateurs comporte un train planétaire à quatre éléments pour additionner la puissance hydraulique et la puissance mécanique, suivi d'un second train planétaire à trois éléments.

3. Transmission à division de puissance selon la revendication 1, caractérisée en ce que les deux embrayages (76,77) sont assemblés en un paquet d'embrayages (75) et sont agencés de façon concentrique de manière à ce que l'embrayage (76) transmettant le plus grand couple est l'embrayage extérieur et l'embrayage (77) transmettant un couple inférieur est l'embrayage intérieur.

4. Transmission à division de puissance selon les revendications 1 à 3, caractérisée en ce qu'au moins un embrayage (71,76,77; 23,24) est agencé en embrayage de passage composite à crabots et friction, dont le profil d'accouplement (78) des éléments d'embrayage (80,81;82,83) est agencé de manière à créer une force axiale dépendante du couple tendant à ouvrir l'embrayage et en ce que les embrayages sont maintenus fermés par pression hydraulique.

5. Transmission à division de puissance selon les revendications 1 à 3, caractérisée en ce que les embrayages (77 et 76) sont pourvus d'un élément d'embrayage commun en tôle emboutie.

6. Transmission à division de puissance selon la revendication 5, caractérisée en ce que le profil d'accouplement (98) pour l'autre embrayage de gamme (77) est également embouti dans cet élément d'embrayage commun (84) et est accouplé avec le profil extérieur du piston (83), qui forme une pièce unique avec la couronne d'embrayage.

7. Transmission à division de puissance selon l'une des revendications 1 à 6, caractérisée en ce que le paquet d'embrayages (87, 86) et de préférence le second train planétaire (11) comprenant tous les éléments d'embrayage (71,76 et 77) pour toutes les gammes de vitesses sont prévus pour être montés dans le carter d'extrémité (88) comme un sous-ensemble commun.

8. Transmission à division de puissance selon l'une des revendications 1 à 7, caractérisée en ce que l'élément d'embrayage (porte satellites 28; couronne d'embrayage 99) opposé aux pistons (84;81) est monté axialement élastique contre la force d'un ressort (91;92), afin de fixer l'élément d'embrayage sans contact et sans frottement contre sa surface de support (90;93) correspondante.

9. Transmission à division de puissance selon l'une des revendications 1 à 8, caractérisée en ce que le couple moteur est brièvement réduit pendant le passage de vitesse.
